# EUROPÄISCHE PATENTSCHRIFT

(11) **EP 4 308 395 B1**
(45) Veröffentlichungstag und Bekanntmachung des Hinweises auf die Patenterteilung: **24.07.2024**
(21) Anmeldenummer: 22703312.3
(22) Anmeldetag: 24.01.2022
(51) Int. Cl.: B60K 1/04

(54) **UNTERBODENBAUTEIL MIT SENSOREINRICHTUNG UND BATTERIEANORDNUNG MIT EINEM SOLCHEN UNTERBODENBAUTEIL**
UNDERTRAY COMPONENT WITH A SENSOR DEVICE, AND BATTERY ARRANGEMENT WITH SUCH AN UNDERTRAY COMPONENT
COMPOSANT DE SOUS-PLATEAU DOTÉ D'UN CAPTEUR ET AGENCEMENT DE BATTERIE DOTÉ D'UN TEL COMPOSANT DE SOUS-PLATEAU

(30) Priorität: 15.03.2021 DE 102021106169
(43) Veröffentlichungstag der Anmeldung: 24.01.2024
(73) Patentinhaber: AUDI AG, 85057 Ingolstadt (DE)
(72) Erfinder: RAUSCH, Julius, 74074 Heilbronn (DE); STOLL, Oliver, 69429 Waldbrunn (DE)
(86) Internationale Anmeldenummer: PCT/EP2022/051464
(87) Internationale Veröffentlichungsnummer: WO 2022/194431

(56) Entgegenhaltungen:
- DE-A1- 102017 206 663
- DE-A1- 102017 219 895
- DE-A1- 102018 130 881
- DE-A1- 102019 119 996
- DE-A1- 102019 207 435
- DE-U1- 202020 102 252
- US-A1- 2020 156 486

## Beschreibung

Die Erfindung betrifft ein Unterbodenbauteil für ein Kraftfahrzeug. Die Erfindung betrifft ferner eine Batterieanordnung für ein Kraftfahrzeug, die ein solches Unterbodenbauteil umfasst.

Ein Unterbodenbauteil betreffender Art dient dem mechanischen Schutz des Unterbodens eines Kraftfahrzeugs und/oder einer im Bereich des Fahrzeug- bzw. Karosseriebodens angeordneten Fahrzeugkomponente, insbesondere einer Traktionsbatterie.

Aus dem Stand der Technik sind Unterbodenbauteile bekannt, die mit einer Sensoreinrichtung ausgestattet sind, um Beschädigungen am Unterbodenbauteil, die bspw. durch Kollisionen, Steinschläge, Bodenaufsetzer, Pollerüberfahrten oder dergleichen verursacht werden, feststellen zu können.

Die nächstliegende DE 10 2018 130 881 A1 beschreibt eine Traktionsbatterie eines Kraftfahrzeugs. Die Traktionsbatterie umfasst ein Batteriegehäuse mit einer Bodenwand. Vorzugsweise bildet die Bodenwand des Batteriegehäuses einen Unterboden des Kraftfahrzeugs. In das Batteriegehäuse sind benachbart zur Bodenwand eine gewellte oder gefaltete Metallstruktur, ein Sensor sowie eine Verformungseinrichtung für die Metallstruktur integriert. Nach einer vorteilhaften Weiterbildung ist der Sensor eine Messfolie, die auf eine Innenseite der Bodenwand das Batteriegehäuse aufgebracht ist. Dann, wenn der Sensor detektiert, dass eine auf die Bodenwand des Batteriegehäuses einwirkende Kraft oder ein der Kraft entsprechender Parameter, wie zum Beispiel ein Druck, größer als ein Grenzwert ist, ist die Metallstruktur durch die Verformungseinrichtung in Richtung auf die Bodenwand des Batteriegehäuses von den Batteriemodulen weg verformbar.

Die DE 10 2019 207 435 A1 beschreibt einen sogenannten Unterfahrschutz, der von unten wirkende Kräfte weitgehend abfängt, wobei mittels einer Sensorfunktion der vollständige oder teilweise Verlust der strukturellen Integrität des Unterfahrschutzes ermittelbar ist.

Die DE 20 2020 102 252 U1 beschreibt ein Strukturbauteil, das als Unterbodenschutz eines Kraftfahrzeug ausgeführt sein kann. Das Strukturbauteil weist eine Sensoranordnung mit mindestens einem Lichtwellenleiter auf, die eine Beschädigung des Strukturbauteils erkennt.

Zum Stand der Technik wird ferner auf die DE 10 2019 119 996 A1, DE 10 2017 206 663 A1, US 2020/156486 A1 und DE 10 2017 219 895 A1 hingewiesen.

Die Erfindung stellt nun ein weiteres Unterbodenbauteil bereit, das leicht ist, einen guten Schutz bietet und mit einer Sensoreinrichtung zur Erfassung von Beschädigungen ausgestattet ist. Mit dem nebengeordneten Patentanspruch erstreckt sich die Erfindung auch auf eine Batterieanordnung für ein Kraftfahrzeug. Zusätzliche Merkmale der Erfindung ergeben sich analog für beide Erfindungsgegenstände aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und der Zeichnung.

Das erfindungsgemäße Unterbodenbauteil für ein Kraftfahrzeug (Kraftfahrzeugunterbodenbauteil) umfasst:
- ein plattenartiges Element bzw. Plattenelement, das eine (der Fahrbahn zugewandte bzw. die untere Grenzkontur bildende) Unterseite und eine (dem Kraftfahrzeug zugewandte) Oberseite aufweist;
- wenigstens ein an der Oberseite des Plattenelements angeordnetes Abstützelement, welches dafür vorgesehen ist, das Plattenelement gegen eine fahrzeugseitige Struktur abzustützen und zu dieser fahrzeugseitigen Struktur zu beabstanden, wobei dieses wenigstens eine Abstützelement zugleich als Trennwand oder dergleichen ausgebildet ist, welche den Bereich oberhalb des Plattenelements in mehrere (d. h. in wenigstens zwei) Kammern bzw. kammerartige Fächer unterteilt (das erfindungsgemäße Unterbodenbauteil kann insofern auch als Mehrkammer-Unterbodenbauteil bezeichnet werden);
- eine Sensoreinrichtung, die zumindest einen elektrisch leitfähigen Sensordraht aufweist, der im oder auf dem Plattenelement angeordnet ist, wobei die Sensorvorrichtung dafür vorgesehen ist, ein durch äußere Krafteinwirkung von unten bzw. durch äußere Krafteinwirkung auf die Unterseite (des Plattenelements) verursachtes Eindringen (Intrusion) des Plattenelements in wenigstens eine der Kammern zu erfassen bzw. zu detektieren.

Ein solches Eindringen des Plattenelements in wenigstens eine der Kammern geht in der Regel auch mit einer Beschädigung des Unterbodenbauteils bzw. einem Verlust dessen strukturellen Integrität einher und kann außerdem auch auf eine Beschädigung des zu schützenden Unterbodens bzw. der zu schützenden Fahrzeugkomponente hinweisen. Die vorgesehene Sensoreinrichtung ermöglicht quasi eine Überwachung des Unterbodenbauteils, um sicherzustellen, dass solche Beschädigungen, insbesondere kritische Beschädigungen, nicht unbemerkt bleiben.

Das Plattenelement kann aus Kunststoff, insbesondere faserverstärktem Kunststoff, gefertigt sein. Das Plattenelement kann auch einen geschäumten Kern, insbesondere einen Kunststoff-Schaumkern, aufweisen, der zwischen Außen- bzw. Decklagen, insbesondere CFK- oder GFK-Decklagen, angeordnet ist. Auch das Abstützelement kann aus Kunststoff, insbesondere faserverstärktem Kunststoff, gefertigt sein.

Das erfindungsgemäße Unterbodenbauteil kann nur ein Abstützelement, das zugleich als Trennwand ausgebildet ist, aufweisen oder mehrere solcher Abstützelemente. Ein Abstützelement kann auch derart ausgebildet sein, dass dieses mehrere Trennwandabschnitte umfasst.

Das Plattenelement und das wenigstens eine Abstützelement können separat gefertigt und in geeigneter Weise miteinander verbunden sein. Bevorzugt sind das Plattenelement und das Abstützelement einstückig ausgebildet, d. h. in einem Stück gefertigt, bspw. als Spritguss- oder Pressgussteil.

Erfindungsgemäß weist die Sensoreinrichtung zumindest einen elektrisch leitfähigen Sensordraht auf, der im oder auf dem Plattenelement, insbesondere auf der Oberseite, angeordnet ist. Eine Verformung des Plattenelements führt zu einer entsprechenden Verformung, insbesondere Verlängerung bzw. Streckung, des Sensordrahts und zu einer erfassbaren Veränderung, insbesondere Erhöhung, des elektrischen Widerstands des Sensordrahts, wobei ein nicht auszuschließender Abriss des Sensordrahts zu einem unendlich hohen Widerstand führt. Durch eine quantitative Erfassung der Widerstandsveränderung (des elektrischen Widerstands des Sensordrahts) kann zumindest näherungsweise auch die Intensität der Krafteinwirkung bzw. der daraus resultierende Beschädigungsgrad ermittelt werden (je stärker die Deformation umso höher die Widerstandsänderung). Im Weiteren ist dann auch eine Beurteilung möglich, ob die erfasste Beschädigung kritisch oder unkritisch ist.

Dabei kann auch eine Temperaturkompensation erfolgen, um durch Temperaturschwankungen verursachte Fehlmessungen auszuschließen. Der Sensordraht kann sowohl aus Metall bzw. einer Metalllegierung als auch aus Kohlenstoff (Kohlenstofffaser) gebildet sein. Bevorzugt ist der Sensordraht mit einer elektrischen Isolierung, bspw. einem Isolierlack, versehen.

Bevorzugt ist vorgesehen, dass der Sensordraht mäanderförmig verlegt ist bzw. einen mäanderförmigen Verlauf aufweist, insbesondere derart, dass der betreffende Bereich im Wesentlichen vollflächig sensorisch erfasst werden kann.

Es kann wenigstens ein, insbesondere mäanderförmig verlaufender, Sensordraht vorgesehen sein, der über wenigstens ein Abstützelement bzw. über wenigstens eine Trennwand hinweg mehrere Kammern abdeckt, wodurch ein Eindringen des Plattenelements in wenigstens eine dieser Kammern erfasst werden kann. Dies ermöglicht einen relativ einfachen und kostengünstigen Aufbau des Unterbodenbauteils mit wenigen Sensordrähten (gegebenenfalls auch nur einem Sensordraht) sowie eventuell auch eine bereichsweise Lokalisierung einer Beschädigung. Andererseits kann für einzelne Kammern, insbesondere für jede Kammer, wenigstens ein, insbesondere mäanderförmig verlaufender, Sensordraht vorgesehen sein, um das Eindringen des Plattenelements in die jeweilige Kammer erfassen zu können. Dies ermöglicht die genaue Lokalisierung einer Beschädigung bzw. die Zuordnung einer erfassten Beschädigung zu einer bestimmten Kammer.

Eine erfindungsgemäße Batterieanordnung für ein Kraftfahrzeug (Kraftfahrzeugbatterieanordnung), insbesondere für einen Personenkraftwagen, umfasst zumindest die folgenden Komponenten:
- eine mit einem Gehäuse ausgebildete Traktions- bzw. Fahrbatterie;
- eine den Gehäuseboden bildende oder unterhalb des Gehäusebodens angeordnete Kühleinrichtung zur Kühlung der Traktionsbatterie;
- (wenigstens) ein unterhalb der Kühleinrichtung bzw. unterhalb des Gehäusebodens angeordnetes erfindungsgemäßes Unterbodenbauteil, welches sich mit seinem wenigstens einen Abstützelement gegen die Kühleinrichtung und/oder (direkt) gegen den Gehäuseboden abstützt.

Zwischen der Kühleinrichtung und dem Plattenelement des Unterbodenbauteils befindet sich somit ein in mehrere Kammern bzw. kammerartige Fächer unterteilter Abstandsbereich, durch den die Kühleinrichtung besonders gut geschützt ist. Bevorzugt weist das Batteriegehäuse mehrere Kammern zur Aufnahme von Batteriemodulen oder dergleichen auf, wobei die Kammern des Unterbodenbauteils insbesondere (zumindest annähernd) kongruent zu den Kammern des Batteriegehäuses angeordnet sind, sodass die Kammern in z-Richtung quasi übereinander liegen. Dies ermöglicht eine besonders effektive lastpfadgerechte Abstützung des Unterbodenbauteils am Batteriegehäuse.

Die erfindungsgemäße Batterieanordnung kann ferner eine Auswerteeinrichtung oder dergleichen (bspw. ein Steuergerät) umfassen, die dazu ausgebildet ist, durch Auswerten von Sensordaten (der Sensoreinrichtung), insbesondere durch Erkennen von Widerstandsveränderungen wenigstens eines Sensordrahts (s. o.), eine etwaige Beschädigung des Unterbodenbauteils (durch Eindringen des Plattenelements in wenigstens eine der Kammern) zu ermitteln. Die Auswerteeinrichtung kann ferner dazu ausgebildet sein, eine solche Beschädigung auch zu lokalisieren (bei entsprechender Ausgestaltung der Sensoreinrichtung) und/oder den Beschädigungsgrad der Beschädigung zu ermitteln sowie gegebenenfalls im Weiteren auch eine kritische Beschädigung von einer unkritischen Beschädigung zu unterscheiden. In der Folge können dann automatisch geeignete Schutzmaßnahmen zur Gefahrenabwehr veranlasst werden, wie bspw. das Ausgeben einer Warnmeldung an den Fahrer, das Ausschalten des Fahrzeugantriebs, das Verhindern eines Ladevorgangs etc.

Die Erfindung wird nachfolgend anhand der Zeichnung näher erläutert.
- Fig. 1: zeigt ein Kraftfahrzeug mit einer erfindungsgemäßen Batterieanordnung.
- Fig. 2: veranschaulicht in einem Ausschnitt den Aufbau der Batterieanordnung aus Fig. 1 (ohne Krafteinwirkung und mit Krafteinwirkung).
- Fig. 3: zeigt in einer Draufsicht eine Ausführungsmöglichkeit eines Unterbodenbauteils der Batterieanordnung aus Fig. 1 und Fig. 2.
- Fig. 4: zeigt in einer Draufsicht eine weitere Ausführungsmöglichkeit eines Unterbodenbauteils der Batterieanordnung aus Fig. 1 und Fig. 2.
- Fig. 5: zeigt in einer Draufsicht eine weitere Ausführungsmöglichkeit eines Unterbodenbauteils der Batterieanordnung aus Fig. 1 und Fig. 2.

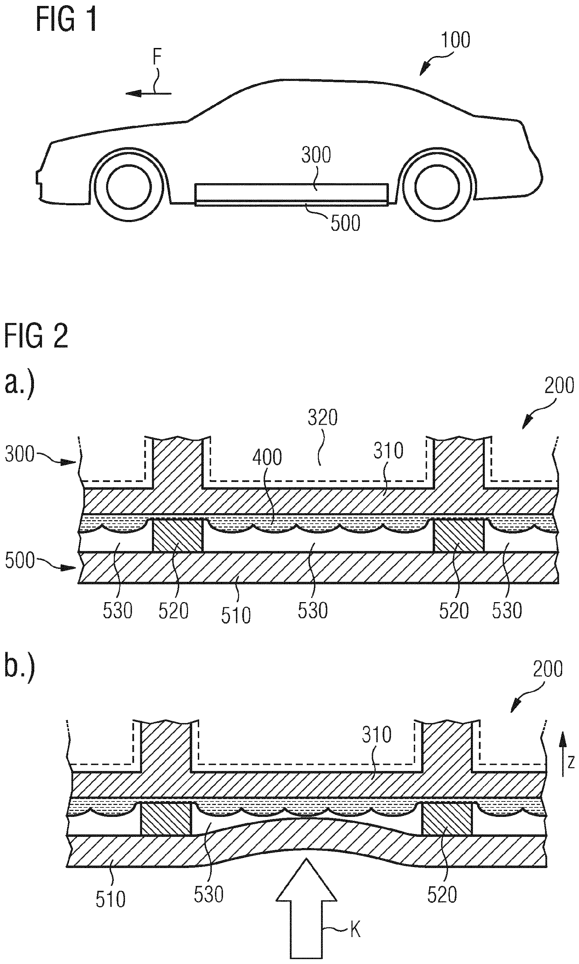

Das in Fig. 1 gezeigte Kraftfahrzeug 100, wobei es sich beispielhaft um einen zumindest teilweise elektrisch angetriebenen Personenkraftwagen handelt, weist eine im Bereich des Fahrzeugbodens angeordnete Traktionsbatterie 300 auf, die nach unten, d. h. in Richtung der Fahrbahn, durch ein erfindungsgemäßes Unterbodenbauteil 500 geschützt ist. Das Unterbodenbauteil 500 ist überwiegend aus faserverstärktem Kunststoff (FVK) gefertigt. Die Traktionsbatterie 300 und das Unterbodenbauteil 500 bilden eine erfindungsgemäße Batterieanordnung 200 (siehe Fig. 2).

Fig. 2 veranschaulicht den Aufbau einer solchen Batterieanordnung 200. Die Batterieanordnung 200 umfasst die mit einem Gehäuse (Batteriekasten oder dergleichen) ausgebildete Traktionsbatterie 300, eine unterhalb des Gehäusebodens 310 angeordnete Kühleinrichtung 400 (die bspw. eine Kühlkanalstruktur enthält) und das unterhalb der Kühleinrichtung 400 angeordnete Unterbodenbauteil 500. Das Gehäuse der Traktionsbatterie 300 weist mehrere Kammern auf, in denen Batteriemodule 320 angeordnet sind. Das Unterbodenbauteil 500 weist ein flächiges Platten- bzw. Bodenelement 510 auf.

Ferner sind mehrere zum Unterbodenbauteil 500 gehörende Abstützelemente 520 vorgesehen, die das Plattenelement 510 gegen die Kühleinrichtung 400 oder gegebenenfalls auch direkt gegen das Gehäuse bzw. den Gehäuseboden 310 abstützen (sodass sich die Kühleinrichtung 400 quasi zwischen den Abstützelementen 520 befindet). Bei diesen Abstützelementen 520 handelt es sich um Erhöhungen bzw. Erhebungen, die an der Oberseite des Plattenelements 510 angeordnet sind. Die Abstützelemente 520 fungieren zugleich auch als Abstandshalter, die das Plattenelement 510 zur Kühleinrichtung 400 und zum Gehäuseboden 310 beabstanden. Die Abstützelemente 520 können einstückig mit dem Plattenelement 510 ausgebildet sein. Die Befestigung des Unterbodenbauteils 500 kann mittels Verschraubung durch die Abstützelemente 520 hindurch erfolgen.

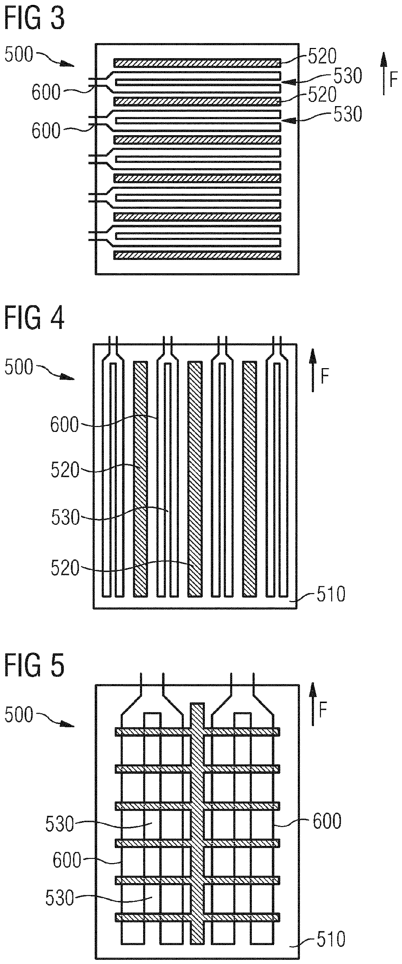

Die Abstützelemente 520 sind zugleich als Trennwände oder dergleichen ausgebildet (siehe auch Fig. 3 bis 5), welche den Bereich oberhalb des Plattenelements 510 in mehrere Kammern 530 unterteilen. Die Kammern 530 verbessern die Schutzwirkung des Unterbodenbauteils 500, indem quasi stabile Verformungs- bzw. Deformationsfreiräume für das Plattenelement 510 bereitgestellt werden, die sich in z-Richtung zwischen der Oberseite des Plattenelements 510 und der Kühleinrichtung 400 erstrecken, wie in Fig. 2a gezeigt. Bei einer Krafteinwirkung K (bspw. einem Einschlag) von unten kann es zu einer Verformung bzw. Deformation des Plattenelements 510 in z-Richtung kommen, wobei das Plattenelement 510 in wenigstens eine der Kammern 530 eindringt, wie in Fig. 2b veranschaulicht. Dies geht in der Regel mit einer Beschädigung des Unterbodenbauteils 500 bzw. einem Verlust der strukturellen Integrität einher und kann trotz des Verformungsfreiraums auch zu einer Beschädigung der Kühleinrichtung 400 und/oder der Traktionsbatterie 300 führen.

Das Unterbodenbauteil 500 ist mit einer Sensoreinrichtung ausgestattet, die dafür vorgesehen ist, ein durch äußere Krafteinwirkung K auf die Unterseite verursachtes Eindringen (Intrusion) des Plattenelements 510 in wenigstens eine der Kammern 530 (wie in Fig. 2b gezeigt) zu erfassen, sodass gegebenenfalls geeignete Schutzmaßnahmen veranlasst werden können, wie oben beschrieben.

Fig. 3 zeigt eine Ausführungsmöglichkeit der Sensoreinrichtung, bei der im oder auf dem Plattenelement 510, insbesondere auf dessen Oberseite, mehrere elektrisch leitfähige Sensordrähte 600 angeordnet sind, derart, dass für jede Kammer 530 ein Sensordraht 600 mit mäanderförmigem Verlauf vorgesehen ist, wobei das durch den jeweiligen Sensordraht 600 gebildete Sensorfeld (Sensorfläche) den jeweiligen Bereich zwischen den Abstützelementen bzw. Trennwänden 520 im Wesentlichen vollflächig abdeckt. Die Sensordrähte 600 sind in geeigneter Weise kontaktiert. Eine Verformung des Plattenelements 510 (wie bspw. in Fig. 2b gezeigt) führt zu einer erfassbaren Veränderung des elektrischen Widerstands des betreffenden Sensordrahts 600. Die Auswertung kann mithilfe einer Auswerteeinrichtung erfolgen, wie oben beschrieben.

Bei der in Fig. 3 gezeigten ersten Ausführungsmöglichkeiten sind die Abstützelemente bzw. Trennwände 520 bezüglich der Fahrtrichtung F des Kraftfahrzeugs 100 querverlaufend angeordnet. Fig. 4 zeigt eine zweite Ausführungsmöglichkeit, bei der die Abstützelemente bzw. Trennwände 520 bezüglich der Fahrtrichtung F längsverlaufend angeordnet sind. Fig. 5 zeigt eine dritte Ausführungsmöglichkeit, bei der quer- und längsverlaufende Abstützelemente bzw. Trennwände 520 vorgesehen sind, die quasi mehrere Gefache bilden. Die Sensordrähte 600 sind hier so angeordnet, dass die dadurch gebildeten Sensorfelder jeweils mehrere Kammern 530 abdecken.

Die in den Fig. 3 bis 5 gezeigten Unterbodenbauteile 500 können mit einer nicht gezeigten, insbesondere vollständig umlaufenden, Seitenwandung oder dergleichen ausgebildet sein. Im Übrigen ist ein erfindungsgemäßes Unterbodenbauteil 500 nicht auf die oben beschriebene bevorzugte Verwendung (für eine Traktionsbatterie) beschränkt, sondern auch anderweitig einsetzbar.

## Patentansprüche

1. Unterbodenbauteil (500) für ein Kraftfahrzeug (100), mit
- einem Plattenelement (510), das eine Unterseite und eine Oberseite aufweist; und
- einer Sensoreinrichtung, die im oder auf dem Plattenelement (510) angeordnet ist, wobei diese Sensorvorrichtung dafür vorgesehen ist, eine äußere Krafteinwirkung (K) auf die Unterseite des Plattenelements (510) zu erfassen,
**dadurch gekennzeichnet,**
- **dass** wenigstens ein an der Oberseite des Plattenelements (510) angeordnetes Abstützelement (520) vorhanden ist, welches dafür vorgesehen ist, das Plattenelement (510) gegen eine fahrzeugseitige Struktur abzustützen und zu dieser fahrzeugseitigen Struktur zu beabstanden, wobei dieses Abstützelement (520) zugleich als Trennwand ausgebildet ist, welche den Bereich oberhalb des Plattenelements (510) in mehrere Kammern (530) unterteilt; und
- **dass** die Sensoreinrichtung zumindest einen elektrisch leitfähigen Sensordraht (600) aufweist, der im oder auf dem Plattenelement (510) angeordnet ist, wobei die Sensorvorrichtung dafür vorgesehen ist, ein durch äußere Krafteinwirkung (K) auf die Unterseite verursachtes Eindringen des Plattenelements (510) in wenigstens eine der Kammern (530) zu erfassen.

2. Unterbodenbauteil (500) nach Anspruch 1,
**dadurch gekennzeichnet, dass**
das Plattenelement (510) und das Abstützelement (520) einstückig ausgebildet sind.

3. Unterbodenbauteil (500) nach Anspruch 1 oder 2,
**dadurch gekennzeichnet, dass**
der Sensordraht (600) einen mäanderförmigen Verlauf aufweist.

4. Unterbodenbauteil (500) nach einem der Ansprüche 1 bis 3,
**dadurch gekennzeichnet, dass**
wenigstens ein Sensordraht (600) vorgesehen ist, der mehrere Kammern (530) abdeckt.

5. Unterbodenbauteil (500) nach einem der Ansprüche 1 bis 3,
**dadurch gekennzeichnet, dass**
für jede Kammer (530) ein Sensordraht (600) vorgesehen ist.

6. Batterieanordnung (200) für ein Kraftfahrzeug (100), umfassend:
- eine mit einem Gehäuse ausgebildete Traktionsbatterie (300);
- eine den Gehäuseboden (310) bildende oder unterhalb des Gehäusebodens (310) angeordnete Kühleinrichtung (400);
- ein unterhalb der Kühleinrichtung (400) angeordnetes Unterbodenbauteil (500), das gemäß einem der vorhergehenden Ansprüche 1 bis 5 ausgebildet ist und sich mit seinem Abstützelement (520) gegen die Kühleinrichtung (400) und/oder gegen den Gehäuseboden (310) abstützt.

7. Batterieanordnung (200) nach Anspruch 6,
**dadurch gekennzeichnet, dass**
das Batteriegehäuse mehrere Kammern zur Aufnahme von Batteriemodulen (320) aufweist, wobei die Kammern (530) des Unterbodenbauteils (500) kongruent zu den Kammern des Batteriegehäuses angeordnet sind.

8. Batterieanordnung (200) nach Anspruch 6 oder 7,
**ferner umfassend**
eine Auswerteeinrichtung, die dazu ausgebildet ist, durch Auswerten von Sensordaten der Sensoreinrichtung eine Beschädigung des Unterbodenbauteils (500) zu ermitteln.

9. Batterieanordnung (200) nach Anspruch 8,
**dadurch gekennzeichnet, dass**
die Auswerteeinrichtung ferner dazu ausgebildet ist, eine Beschädigung zu lokalisieren und/oder den Beschädigungsgrad zu ermitteln.

## Claims

1. Underbody component (500) for a motor vehicle (100), comprising
- a panel element (510), which has a lower side and an upper side; and
- a sensor device, which is arranged in or on the panel element (510), wherein said sensor device is intended to detect an external force (K) acting on the lower side of the panel element (510),
**characterized in that**
- at least one support element (520) is provided on the upper side of the panel element (510), which is intended to support the panel element (510) against a structure on the vehicle side and to distance it from the structure on the vehicle side, wherein said support element (520) is also configured as a partition wall which divides the area above the panel element (510) into a plurality of chambers (530); and
- **in that** the sensor device has at least one electrically conductive sensor wire (600) which is arranged in or on the panel element (510), wherein the sensor device is provided for detecting a penetration of the panel element (510) into at least one of the chambers (530) caused by an external force (K) acting on the lower side.

2. Underbody component (500) according to claim 1,
**characterized in that**
the panel element (510) and the support element (520) are configured in one piece.

3. Underbody component (500) according to claim 1 or 2,
**characterized in that**
the sensor wire (600) has a meandering path.

4. Underbody component (500) according to any one of claims 1 to 3,
**characterized in that**
at least one sensor wire (600) is provided which covers a plurality of chambers (530).

5. Underbody component (500) according to any one of claims 1 to 3,
**characterized in that**
for each chamber (530) a sensor wire (600) is provided.

6. Battery arrangement (200) for a motor vehicle (100), comprising:
- a traction battery (300) configured with a housing;
- a cooling device (400) forming the housing base (310) or arranged underneath the housing base (310);
- an underbody component (500) arranged underneath the cooling device (400), which is formed according to any one of the preceding claims 1 to 5 and is supported with its support element (520) against the cooling device (400) and/or against the housing base (310).

7. Battery arrangement (200) according to claim 6,
**characterized in that**
the battery housing has a plurality of chambers for receiving battery modules (320), wherein the chambers (530) of the underbody component (500) are congruent to the chambers of the battery housing.

8. Battery arrangement (200) according to claim 6 or 7,
**further comprising**
an evaluation device which is configured to determine damage to the underbody component (500) by evaluating sensor data from the sensor device.

9. Battery arrangement (200) according to claim 8,
**characterized in that**
the evaluation device is further configured to locate damage and/or determine the degree of damage.

## Revendications

1. Pièce de bas de caisse (500) destinée à un véhicule à moteur (100), avec
- un élément de plaque (510) qui présente un côté inférieur et un côté supérieur ; et
- un dispositif de capteur qui est disposé dans ou sur l'élément de plaque (510), dans laquelle ledit dispositif de capteur est prévu pour détecter une action de force (K) extérieure sur le côté inférieur de l'élément de plaque (510),
**caractérisée en ce que**
- le au moins un élément d'appui (520) disposé au niveau du côté supérieur de l'élément de plaque (510) est présent, qui est prévu pour appuyer l'élément de plaque (510) contre une structure côté véhicule et pour l'espacer de ladite structure côté véhicule, dans laquelle ledit élément d'appui (520) est configuré simultanément comme paroi de séparation qui divise la zone au-dessus de l'élément de plaque (510) en plusieurs chambres (530) ; et
- le dispositif de capteur présente au moins un fil de capteur (600) électroconducteur qui est disposé dans ou sur l'élément de plaque (510), dans laquelle le dispositif de détection est prévu pour détecter une infiltration causée par l'action de force (K) extérieure sur le côté inférieur de l'élément de plaque (510) dans au moins un des chambres (530).

2. Pièce de bas de caisse (500) selon la revendication 1,
**caractérisée en ce que**
l'élément de plaque (510) et l'élément d'appui (520) sont configurés d'un seul tenant.

3. Pièce de bas de caisse (500) selon la revendication 1 ou 2,
**caractérisée en ce que**
le fil de capteur (600) présente un tracé en forme de méandres.

4. Pièce de bas de caisse (500) selon l'une quelconque des revendications 1 à 3,
**caractérisée en ce que**
au moins un fil de capteur (600) est prévu, qui recouvre plusieurs chambres (530).

5. Pièce de bas de caisse (500) selon l'une quelconque des revendications 1 à 3,
**caractérisée en ce que**
un fil de capteur (600) est prévu pour chaque chambre (530).

6. Agencement de batterie (200) destiné à un véhicule à moteur (100), comprenant :
- une batterie de traction conçue avec un boîtier (300) ;
- un appareil de refroidissement (400) formant le fond de boîtier (310) ou disposé en dessous du fond de boîtier (310) ;
- une pièce de bas de caisse (500) disposée en dessous de l'appareil de refroidissement (400), qui est conçue selon l'une quelconque des revendications précédentes 1 à 5 et qui s'appuie avec son élément d'appui (520) contre l'appareil de refroidissement (400) et/ou contre le fond de boîtier (310).

7. Agencement de batterie (200) selon la revendication 6,
**caractérisé en ce que**
le boîtier de batterie présente plusieurs chambres pour recevoir des modules de batterie (320), dans lequel les chambres (530) de la pièce de bas de caisse (500) sont disposées de manière congruente par rapport aux chambres du boîtier de batterie.

8. Agencement de batterie (200) selon la revendication 6 ou 7,
**comprenant en outre**
un appareil d'évaluation qui est conçu pour déterminer une détérioration de la pièce de bas de caisse (500) en évaluant des données de capteur du dispositif de capteur.

9. Agencement de batterie (200) selon la revendication 8,
**caractérisé en ce que**
l'appareil d'évaluation est en outre conçu pour localiser une détérioration et/ou déterminer un degré de détérioration.
